# EUROPÄISCHE PATENTSCHRIFT

(11) **EP 3 093 088 B1**
(45) Veröffentlichungstag und Bekanntmachung des Hinweises auf die Patenterteilung: **06.05.2020**
(21) Anmeldenummer: 16159244.9
(22) Anmeldetag: 08.03.2016
(51) Int. Cl.: B23B 33/00

(54) **WERKSTÜCKSPANNVORRICHTUNG MIT STIRNSEITENMITNEHMER**
WORKPIECE CLAMPING DEVICE INCLUDING A FACE DRIVER
DISPOSITIF DE SERRAGE DE PIÈCE COMPRENANT UN CHALUTIER FRONTALE

(30) Priorität: 12.05.2015 DE 102015005951
(43) Veröffentlichungstag der Anmeldung: 16.11.2016
(73) Patentinhaber: Liebherr-Verzahntechnik GmbH, 87437 Kempten (DE)
(72) Erfinder: Weixler, Johannes, 87471 Durach (DE)
(74) Vertreter: Laufhütte, Dieter

(56) Entgegenhaltungen:
- EP-A1- 2 147 734
- DE-B- 1 119 629
- DE-U- 1 902 314
- GB-A- 1 109 804
- JP-A- S5 783 307
- US-A- 2 576 704

## Beschreibung

Die Erfindung betrifft eine Vorrichtung für Werkzeugmaschinen zur Aufnahme eines Werkstücks zwischen zwei Zentrierspitzen gemäß dem Oberbegriff des Anspruchs 1. Ein Beispiel für eine solche Vorrichtung ist aus der US 2576 704 A bekannt. Zudem betrifft die Erfindung ein Verfahren zum Einspannen eines Werkstücks.

Bei der Werkzeugmaschine kann es sich vorzugsweise um eine Maschine zur Zahnradherstellung oder -bearbeitung handeln.

Eine solche Vorrichtung wird häufig als Stirnseitenmitnahme oder Stirnmitnehmer bezeichnet und wird vorzugsweise bei wellenförmigen Werkstücken verwendet die keine oder nur eine unzureichende Werkstückbohrung aufweisen aus der das Werkstück zur Bearbeitung gespannt werden kann. Weiterhin werden solche Vorrichtungen verwendet wenn die Außenfläche der Werkstücke in einer Aufspannung über ihrer gesamten Länge bearbeitet werden sollen. Solche Vorrichtungen sind aus einer Vielzahl von Anmeldungen bekannt, beispielsweise aus der DE 195 34 073 A1 oder der DE 10 2010 060 118 A1.

Zur Bearbeitung der Werkstücke werden diese zunächst zwischen Spitzen gespannt um damit einen möglichst guten Werkstückrundlauf, passend zum Werkstückzentrum, sicherzustellen. Gleichzeitig werden zur Drehmitnahme Mitnehmerelemente, die zur Aufbringung eines hohen Drehmoments mit möglichst großem Abstand konzentrisch zur Spitze angeordnet sind, gegen die antriebsseitige Stirnseite des Werkstücks gedrückt. Je nach Oberflächenhärte des Werkstücks und nach der stirnseitigen Form und Größe der Mitnehmerelemente drücken sich diese unterschiedlich stark in die Oberfläche des Werkstücks ein.

Die Form und Größe der Eindruckfläche muss so gewählt werden, dass eine sichere Drehmitnahme des zu bearbeitenden Werkstücks, bei dem gewählten Bearbeitungsverfahren, gewährleistet ist. Weiterhin muss darauf geachtet werden, dass das Werkstück von der Spitze geführt und nicht durch die Andrückkraft der Mitnehmerelemente von ihr abgehoben wird, damit der präzise Werkstückrundlauf gewährleistet bleibt.

Da die Stirnseiten der Werkstücke zum Zeitpunkt der Bearbeitung häufig noch keinen ausreichenden Planlauf haben, trotzdem aber alle Mitnehmerelemente gleichmäßig in Eingriff mit der Werkstückoberfläche gebracht werden sollen, müssen sich die Mitnehmerelemente unabhängig voneinander an die Werkstückoberfläche anlegen und dabei dann trotzdem eine möglichst gleichmäßige Anpresskraft aufbringen. Die Anpresskraft wird beispielweise in der DE 20 2010 009 973 U hydraulisch gleichmäßig auf alle Mitnehmerelemente aufgebracht. Bei anderen Ausführungsformen gleichen Mitnehmerelemente die auf einem Pendelring oder einer kardanisch gelagerten Scheibe aufliegen den Fehler aus. Bei manchen Ausführungen besteht das Mitnehmerelement auch aus einer pendelnd gelagerten Scheibe mit einer Vielzahl an Mitnehmerschneiden.

Die Zentrierspitze in der Vorrichtung ist dabei entweder axial nachgiebig gelagert oder fest stehend in der Grundaufspannung ausgeführt. Die feste Montage bietet gegenüber einer axial nachgiebigen Spitze den Vorteil eines besseren Werkstückrundlaufs, da kein Bohrungsspiel zwischen der Spitze und der Grundaufspannung notwendig ist, um deren axiale Verschiebbarkeit sicher zu stellen.

Die Position der Mitnehmerelemente darf sich während der Bearbeitung zudem nicht verändern. Bei Werkstückbearbeitungen bei denen Kräfte mit wechselnden Drehrichtungen auf das Werkstück einwirken oder aber bei stark schwankenden Bearbeitungskräften wie dies beispielsweise bei unterbrochenen Schnitten der Fall sein kann, können sich unter der Wechsellast die Mitnehmerelemente in ihrer Bohrung bewegen. Bei langen Wellen kann auch eine Werkstückbiegung, bedingt durch den einseitigen Zerspanungseingriff dazu führen, dass die Mitnehmerelemente während der Werkstückdrehung unterschiedlich stark belastet werden und sich dabei axial verschieben.

Bei Werkstückbearbeitungen, bei denen die exakte Drehlage wichtig für Bearbeitungsergebnis ist, z.B. bei der Verzahnungsbearbeitung, wirkt sich jede Änderung der Drehlage zwischen Vorrichtung und Werkstück negativ auf die Wälzkopplung zwischen Werkzeug und Werkstück aus. Hier ist eine sehr präzise Kopplung zwischen der Drehposition des Werkstücks und der Drehlage des Werkzeugs der Garant für eine hohe Verzahnqualität.

Eine Möglichkeit dies zu gewährleisten ist eine möglichst exakte Führung der Mitnehmerstifte in ihren Bohrungen. Dabei muss trotzdem auf ein ausreichendes Bohrungsspiel geachtet werden, damit die axiale Beweglichkeit der Mitnehmerstifte sichergestellt ist, gleichzeitig darf das Spiel nicht zu groß werden damit eine möglichst präzise Mitnahme erreicht wird.

Dies hat sich bei sehr hohen Qualitätsanforderungen als nicht ausreichend herausgestellt. Daher wurden bei der DE 20 2010 009 973 U dafür die Achsen der Mitnehmerelemente gegen die Drehrichtung des Werkstückes geneigt und verlaufen damit nicht mehr parallel zur Werkstückachse. Das mit den Mitnehmerstiften im Eingriff stehende Werkstück erzeugt so eine, der Drehrichtung entgegengesetzt gerichtete Kraft, die zusammen mit der axial auf die Mitnehmerstifte wirkenden Kraft dazu führen, dass sich die Mitnehmerstifte im gespannten Zustand spielfrei in der Bohrung verkanten und so eine sichere Drehmitnahme gewährleisten. Je nach Ausführung kann jeweils auch eine Teilmenge der Mitnehmerstift in und gegen die Drehrichtung des Werkstücks geneigt sein.

Trotzdem können Wechselbelastungen eines unterbrochenen Schnitts oder Bearbeitungskräfte die in unterschiedlichen Drehrichtungen wirken, dazu führen, dass die Mitnehmerelemente im gespannten Zustand nicht komplett verspannt bleiben. Bedingt durch die auftretenden Wechselkräfte kann sich die Verkantung zeitweise lösen und so geringe Bewegungen in Radialrichtung erlauben und so zu einer Lageänderung des Werkstücks gegenüber der Vorrichtung führen. Diese zeigt sich dann im Bearbeitungsergebnis beispielsweise als Absatz auf der Zahnflanke oder als Zahnrichtungsfehler.

Diese Belastungen können beispielsweise beim Wälzfräsen oder beim Verzahnungsschleifen vorkommen. Im Anschnitt und beim Austritt des Werkzeugs aus der Verzahnung, wenn die Werkzeugschneiden nur noch einflankig im Eingriff sind, tritt dieser Effekt besonders deutlich auf. Wenn Schrägverzahnungen bearbeitet werden tritt dieser Effekt durch den wechselseitigen Kontakt des Werkzeugs mit der linken und rechten Zahnflanke noch deutlicher zu Tage.

Die Aufgabe der vorliegenden Erfindung ist es daher, eine Vorrichtung der eingangs genannten Art so zu verbessern, dass eine spielfreie Drehmitnahme bei allen Bearbeitungsverfahren erreichbar ist. Außerdem darf sich die sichere Einspannung nicht während eines Bearbeitungsprozesses verändern, auch dann nicht, wenn die tangentialen Bearbeitungskräfte die in Größe und Richtung schwanken.

Diese Aufgabe wird durch eine Vorrichtung mit den Merkmalen des unabhängigen Anspruchs 1 gelöst. Anspruch 12 definiert ein Verfahren zur Nutzung der erfindungsgemäßen Vorrichtung. Weitere vorteilhafte Ausführungsformen sind in den abhängigen Ansprüchen angegeben.

Bei der erfindungsgemäßen Vorrichtung mit Stirnseitenmitnahmen wird das zu spannende Werkstück zunächst auf einer fest stehenden Spitze in der Vorrichtung und einer gegenüberliegenden Spitze zentriert. Die feststehende Spitze bietet gegenüber einer beweglichen Spitze den Vorteil, dass sie sehr präzise auf der Maschinen-Tischmitte ausrichtbar ist und kein Bohrungsspiel, welches für eine bewegliche Spitze notwendig wäre, den Werkstückrundlauf nachteilig beeinflusst. Nach dem Zentriervorgang werden die Mitnehmerelemente an die Werkstückstirnseite angelegt.

Konstruktiv sollen die Mitnehmerelemente zur Werkstückmitnahme radial mit möglichst großem Abstand zur Spitze angeordnet sein, damit ein möglichst hohes Drehmoment von der Vorrichtung auf das Werkstück übertragen werden kann. Je nach Werkstückform können auch einzelne Mitnehmerelemente mit unterschiedlichem Abstand zum Zentrum angeordnet sein. Gleichzeitig besteht die Forderung nach einer möglichst schlanken Vorrichtung, damit es, besonders bei der Herstellung von Schrägverzahnungen, nicht zu einer Kollision eines Bearbeitungskopfes oder -werkzeugs mit der Vorrichtung kommt.

Um Planlauffehler der Werkstückstirnseite auszugleichen sollen sich die Mitnehmerelemente zunächst nachgiebig an die Oberfläche anlegen und danach mit annähernd gleichem Druck auf bzw. in die Oberfläche eingedrückt werden. Damit wird vermieden, dass das Werkstück durch ungleichmäßigen oder einseitigen Druck auf dessen Stirnseite kippt und so relativ zur Vorrichtung taumelt.

Daher werden bei der erfindungsgemäßen Vorrichtung die Mitnehmerelemente beim Aufsetzen des Werkstücks auf die Spitze zunächst mechanisch zurückgehalten. Nach dem präzisen Ausrichten des Werkstücks zwischen den Spitzen und dem Aufbringen der notwendige Zentrierkraft, die ein Verschieben des Werkstücks auf der Spitze verhindert, werden durch die Betätigung eines Zugbolzens, in Achsrichtung der Vorrichtung, die Mitnehmerelemente freigegeben und können sich so mit einer einstellbaren Kraft an die Werkstückstirnseite anlegen oder in sie eindrücken. Wird der Zugbolzen darüber hinaus noch weiter in Achsrichtung betätigt, werden die Mitnehmerelemente über zusätzliche Klemmelemente aktiv in ihrer Endposition geklemmt und so während der Werkstückbearbeitung spielfrei in ihrer Lage fixiert.

Durch diesen Spannablauf wird einerseits ein guter Werkstückrundlauf sichergestellt und andererseits das Werkstück auch bei wechselnden Bearbeitungskräften sicher zwischen Spitzen geführt. Das für die Bearbeitung notwendige Drehmoment wird aufgebracht und aufrechterhalten und die präzise Drehübertragung gewährleistet.

In einer weiteren bevorzugten Ausführung ist denkbar, dass die obere Spitze als Hohlspitze oder Lünette ausgebildet ist. Alternativ oder zusätzlich ist eine Ausgestaltung der unteren Spitze als Hohlspitze denkbar. Wichtig ist dabei nur, dass durch das Führungselement ein exakter Rundlauf des Werkstücks sichergestellt wird.

In einer alternativen Ausführungsform kann die Spitze in der Grundaufspannung in axialer Richtung nachgiebig gelagert sein. Durch Abstimmung der Federkraft und der axialen Wege zwischen der Spitze und den Mitnehmerelementen kann ein ähnlicher Spannablauf erzielt werden. Die Federn und die Axialwege müssen dabei so aufeinander abgestimmt sein, das zunächst der Zentriervorgang abgeschlossen ist, bevor die Mitnehmerstifte in den Eingriff mit der Werkstückstirnseite gebracht werden. Bei dieser Ausführung weist die Bohrung zur Führung der Spitze ein geringes Spiel auf. Daher wird diese Ausführung überwiegend dann eingesetzt, wenn die Werkstückform den Einsatz der bevorzugten Ausführung nicht vorsieht.

In einer weiteren Ausführung sind die Kontaktflächen der Mitnehmerelemente zusätzlich noch mit wechselbaren Aufsätzen ausgestattet. So sind Anpassungen an die Materialeigenschaften des zu bearbeitende Werkstücks, die Form und Größe der zulässigen Eindrücke am Werkstück, den Behandlungszustand des Werkstückmateriales, aber auch an das Bearbeitungsverfahren recht einfach durchführbar. Beispielsweise ist es notwendig, dass die Auflagefläche für eine Verzahnungs-Fräsprozess und die Auflage für einen Hartfeinbearbeitungsprozess bei gleichem Werkstück unterschiedlich ausgeführt ist. Zum einen unterscheiden sich die Prozesse in den auftretenden Bearbeitungskräften, zum anderen stellt die gehärtete Randschicht eine Hürde gegen das Eindringen von Auflagepunkte dar. In diesem Fall ist eine Reibmitnahmen durch die Mitnehmerelemente anstrebenswert.

Weiterhin können die Mitnehmerelemente an den oberen Stirnseiten mit unterschiedlichen Aufsätzen versehen werden. Damit kann die Vorrichtung recht einfach an unterschiedliche Werkstücke angepasst werden, sowie im Verschleißfall die Aufsätze problemfrei ausgetauscht werden. Dabei kann es vorteilhaft sein, auf handelsübliche Aufsätze, insbesondere Wendeschneidplatten, zurückzugreifen.

Durch die Einstellmöglichkeit für die Federkraft der Mitnehmerelemente, kann die Kraft entsprechend passend zu den Eigenschaften der Kontaktflächen (Reibschluß, Eindringtiefe, etc.) eingestellt werden. Zusätzlich kann durch eine variable Zugkraft die Höhe der aktiven Klemmkraft für die Mitnehmerelemente beeinflusst werden. Damit könnte, bei reduzierter Klemmkraft, statt einer aktiven Fixierung der Mitnehmerstifte, diese auch nur mit einer Dämpfungswirkung arbeiten.

Weiterhin kann es vorgesehen sein, dass die obere und/oder untere Spitze zur Aufnahme des Werkstücks ebenfalls als Wechselteil ausführbar ist, um diese an unterschiedlich große Werkstückbohrungen und Werkstückabmessungen anzupassen und um im Verschleißfall diese ebenfalls einfach und kostengünstig auszutauschen.

Eine erweiterte Ausführungsform kann vorzugweise bei manueller Beladung, ohne den Einsatz einer Automationseinrichtung, zur Werkstückbeladung eingesetzt werden.

Eine manuellen Beladung bedingt ein zentrisches Aufsetzen des Werkstücks auf die Vorrichtung, um ein Kippen des Werkstück zu verhindern. Damit soll ein eventuelles Umfallen des Werkstücks bei der Beladung und eine mögliche Gefährdung des Maschinenbedieners verhindert werden. Eine Beladung von Maschinen mit beispielsweise langen Wellen wird häufig hängend mit einer Ladeeinrichtung vorzugsweise einer Ringschraube realisiert, welche in eine obere zentrale Bohrung des Werkstücks eingeschraubt wird. Eine derartige Einrichtung muss anschließend aber entfernt werden, bevor die obere Spitze oder das obere Führungselement auf die Oberseite des Werkstücks auffahren kann. Bei der manuellen Beladung muss die Vorrichtung daher eine geeignete Einrichtung zum Halten des Werkstücks aufweisen.

Bei der automatischen Beladung verhindert die Ladeeinrichtung ein Kippen des Werkstücks.

Bei der erweiterten Ausführungsform wird die Kippsicherung über koaxial angeordnete Auflagebolzen/Aufnahmeelemente umgesetzt, auf welche das Werkstück beim Laden aufgelegt werden kann. Diese werden zur anschließenden Werkstückbearbeitung aber von der Werkstückstirnseite zurückgezogen um einen negativen Einfluss auf die Rund-/Planlaufqualität des Werkstücks zu verhindern. Weitere Vorteile und Eigenschaften der Erfindung werden im Folgenden anhand mehrerer Zeichnungen näher erläutert. Es zeigen:
- Fig. 1:: eine Seitenansicht einer erfindungsgemäßen Vorrichtung mit einem Bearbeitungswerkzeug im Eingriff,
- Fig. 2:: einen Schnittansicht durch eine erfindungsgemäße Vorrichtung,
- Fig. 3:: eine Detailansicht einer Betätigungseinrichtung für die Mitnehmerelemente,

- Fig. 4: eine weitere Detailansicht einer Betätigungseinrichtung für die Mitnehmerelemente,
- Fig. 5: eine Detailansicht mit mehreren Varianten für Wechselaufsätze für die Mitnehmerelemente,
- Fig. 6: eine Schnittansicht einer erfindungsgemäßen Vorrichtung in einer erweiterten Ausführungsform, und
- Fig. 7a,b,c: eine Detailansicht zur Darstellung des Spannablaufs bei einer erfindungsgemäßen Vorrichtung in der erweiterten Ausführungsform.

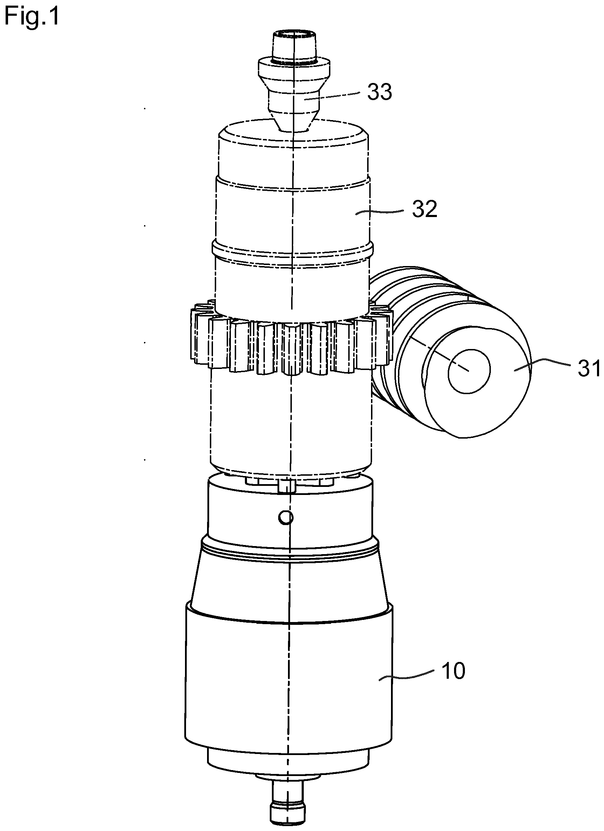

**Figur 1** zeigt eine Seitenansicht einer Vorrichtung mit einem Werkstück 32, welches zwischen einer oberen Spitze 33 und einer unteren Spitze 23 innerhalb der Vorrichtung 10 eingespannt ist. Dieses Werkstück 32 wird mit einem Bearbeitungswerkzeug 31, in diesem Fall einer Schleifschnecke, in seiner Verzahnung bearbeitet. Zu diesem Zweck bewegt sich das Werkzeug 31 in einem oder mehreren Zyklen parallel zur Achsrichtung des Werkstücks 32 mit unterschiedlichen Achsabständen und erzeugt oder bearbeitet so die Verzahnung.

Das Werkstück wird zur Bearbeitung mit einem Ladesystem (nicht dargestellt) oder von Hand auf die Vorrichtung 10 geladen und durch Absenken der oberen Spitze 33 wird das Werkstück 32 zwischen dieser Spitze und der unteren Spitze 23 auf der Vorrichtung eingespannt. In einer anderen Achsanordnung könnte die gesamte Vorrichtung 10 beispielsweise auch horizontal angeordnet sein.

Zunächst wird das Werkstück 32 zwischen Spitzen 23, 33 zentriert, bevor im weiteren Ablauf die Mitnehmerelemente 25 aktiv angelegt werden. So wird ein einwandfreier Rundlauf des Werkstücks 32 erzielt bevor eine sichere Drehmitnahme durch Andrücken der Mitnehmerelemente 25 gegen das Werkstück 32 erreicht wird.

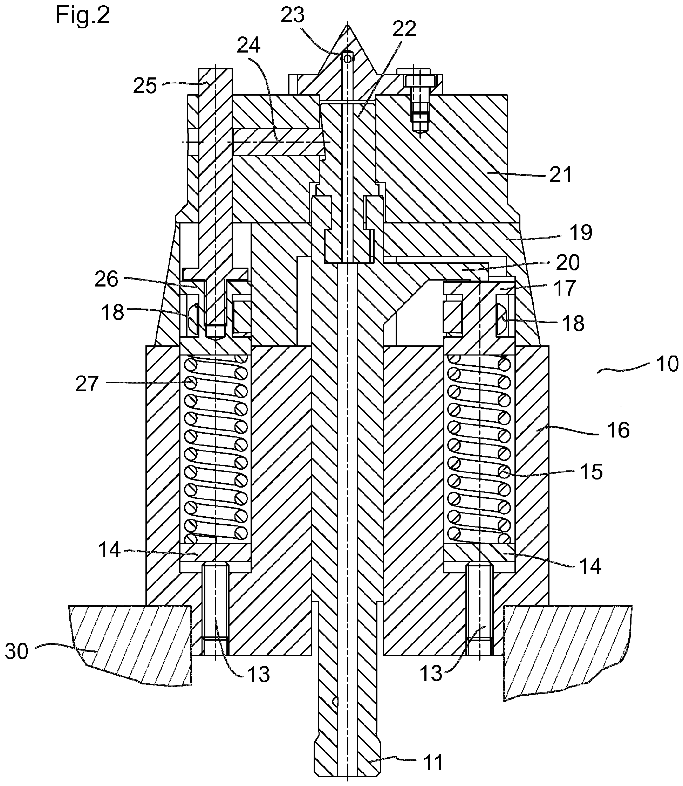

In der Schnittansicht der Vorrichtung 10 in **Figur 2** sind die Details der erfindungsgemäßen Vorrichtung 10 dargestellt. Die Vorrichtung 10 wird auf einem Maschinentisch 30 montiert, der die Drehbewegung auf die Vorrichtung 10 und damit auf das Werkstück 32 überträgt. Im Schnitt ist der, in diesem Fall, dreiteilige Aufbau der Vorrichtung 10, bestehend aus dem Spannuntersatz 16, zur Montage der Vorrichtung 10 auf dem Maschinentisch, dem Aufsatz 19 und dem Vorrichtungsoberteil 21 mit der wechselbaren unteren Spitze 23 erkennbar.

Im Spannuntersatz 16 sind Aufnahmebohrung vorgesehen welche die Federn 15, 27 aufnehmen. Die Andruckkraft der verschieden starken Federn 15, 27 ist über Einstellelemente 13, hier Gewindestifte, beinflussbar. Wenn baugleiche Federn 15, 27 verwendet werden, könnten dies auch unterschiedlich stark vorgespannt werden um einen korrekten Spannablauf sicher zu stellen. Durch verstellen der Einstellelemente 13 begrenzen diese über Druckplatten 14 den Einbauraum der Federn 15, 27 und können so die Andruckkraft der Federn 15, 27 modifizieren. Die Federn 15, 27 wirken wiederum über die Mitnehmer 17, 26 entweder auf das Mitnehmerelement 25 oder aber auf einen der Arme 20 am Zugbolzen 11. Jeweils zwei der Mitnehmer 17 und 26 sind über einen im Aufsatz 19 gelagerte Hebel 18 verbunden.

Der Zugbolzen 11 wirkt auf einen Betätigungsbolzen 22, der über die schrägen Flächen und die Klemmelemente 24 die Mitnehmerelemente 25 in ihrer Position fixieren.

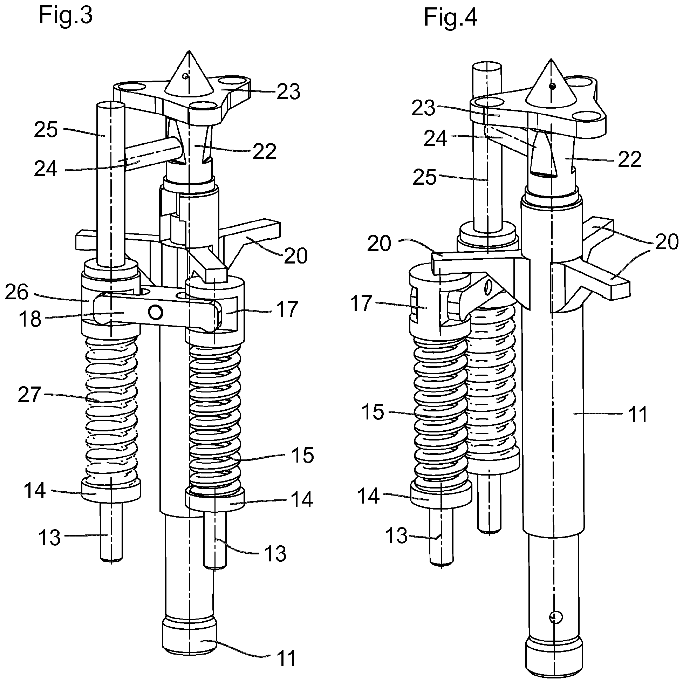

Anhand der Detailansichten der **Figuren 3** und **4** kann nun die Funktionsweise der Vorrichtung 10 erklärt werden. Im Spannablauf wird das Werkstück 32 zunächst zwischen der Spitze 23 und einer gegenüber liegenden Spitze 33 aufgenommen und dadurch im Rundlauf ausgerichtet.

Zum Anlegen der Mitnehmerelemente 25 an die untere Werkstückstirnseite wird nun der Zugbolzen 11 von einer externen Einrichtung nach unten gezogen. Dabei drücken die Arme 20 am Zugbolzen 11 die federkraftbelasteten Mitnehmer 17 ebenfalls nach unten. Über die Hebel 18 werden nun die Mitnehmer 26 betätigt und bewegen so die Mitnehmerelemente 25 nach oben, wodurch sich diese an die Stirnseite des Werkstück 32 anlegen bzw. bei entsprechender Federkraft in die Oberfläche des Werkstücks 32 eindrücken. Die Federkraft der Feder 27 muss dabei entsprechend der gewünschten Eindringtiefe und der dafür notwendigen Flächenpressung entsprechend dimensioniert und eingestellt werden. Gleichzeitig werden über die Zugstange 11 auch die Klemmelemente 24 in Richtung auf die Mitnehmerelemente 25 zu bewegt und klemmen diese in ihrer Position. Dargestellt sind in diesen Figuren je drei Arme 20, aber aus Übersichtlichkeitsgründen wurde auf die Darstellung der Federn 15, 27, Mitnehmer 17, 26, Hebel 18 und Mitnehmerelemente 25, etc. unter jedem Arm 20 verzichtet.

Da über die jeweilige Position der Zugstange bestimmte Abläufe nacheinander ausgelöst werden, muss deren Weg und der Zeitpunkt an dem die Mitnehmerelemente 25 am Werkstück 32 anliegen auf die Position an der die Mitnehmer 17, 26 geklemmt werden, abgestimmt werden. Dazu können die Mitnehmerelemente 25 relativ zu den Mitnehmern 26 in ihrer Position verändert werden. Für diesen Fall sind hier in diesem Beispiel die Gewinde zur Feinabstimmung in den Mitnehmern 26 vorgesehen.

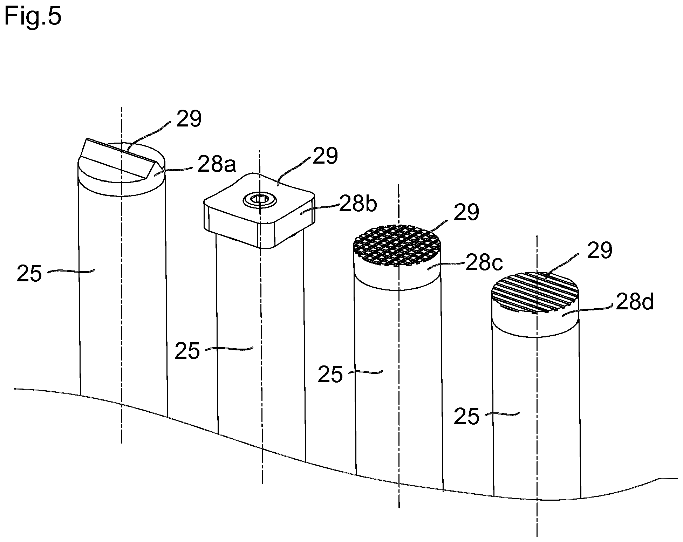

Die Anpassung kann aber auch über Aufsätze an den oberen Stirnseiten der Mitnehmerelemente 25 erfolgen. Beispielhafte Ausführungen werden anhand der Beispiele in der **Figur 5** dargestellt. Diese Aufsätze 28 a bis 28 d bieten neben der Längenanpassung auch die Möglichkeit unterschiedliche Auflageflächen 29 für die Werkstückkontaktfläche anzubringen. Je nachdem welche Zugfestigkeit das Werkstückmaterial aufweist und welche maximale Eindrucktiefe am Werkstück 32 zulässig ist kann dies über die Größe und Form der Auflagefläche beeinflusst werden. Die Größe der Auflageflächen bestimmt dabei die Flächenpressung und über die Gestaltung wie z.B. Rillen, Spitzen, Schneiden, Rauten, oder Karomuster kann der Eindruck im Werkstück entsprechend den Anforderungen angepasst werden.

Bei gehärteten Werkstücken 32 können beispielsweise auch Aufsätze mit hartstoffbeschichteten Stirnflächen (z.B. mit Diamant oder CBN) die notwendige Mitnahmekraft übertragen.

Durch entsprechende Gestaltung der Aufsätze können auch Aufnahmen für die Verwendung handelsüblicher Kaufteile vorgesehen werden. Beispielsweise eine Wendeschneidplatten mit geeigneter Oberflächenform, exemplarisch dargestellt an einer quadratischen Platte 28b. Damit können hier auf einfache und kostengünstige Weise diese Wechselelemente (zweckentfremdet) zum Einsatz kommen.

Selbstverständlich können aber auch die Stirnseiten der Mitnehmerelemente 25 direkt entsprechend ausgeführt werden, ohne dass es besonderer Aufsätze bedarf.

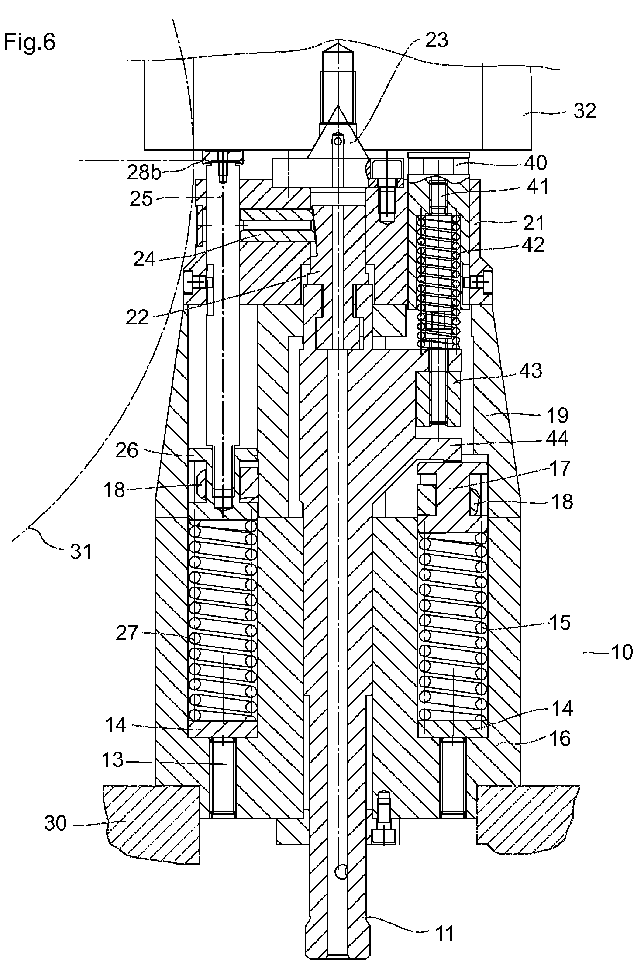

**Figur 6** zeigt eine Schnittansicht einer erfindungsgemäße Vorrichtung in einer erweiterten Ausführung die vorzugweise ohne den Einsatz einer Automationseinrichtung, bei der manuellen Werkstückbeladung, eingesetzt werden kann. Vorteilhafterweise umfasst diese Vorrichtung konzentrisch um die Spitze 23 angeordnete Auflagebolzen 40, auf die das Werkstück 32 bei der manuellen Beladung zunächst annähernd mittig aufsetzbar ist. Nach oben wird der Bewegungsweg für die Auflagebolzen 40 durch die Gewindebolzen 41 begrenzt, welche zwischen den Auflagebolzen 40 und den Armen 44 am Zugbolzen 11 eingeschraubt sind. Die Federn 42 werden dabei entsprechend dem Werkstückgewicht ausgelegt.

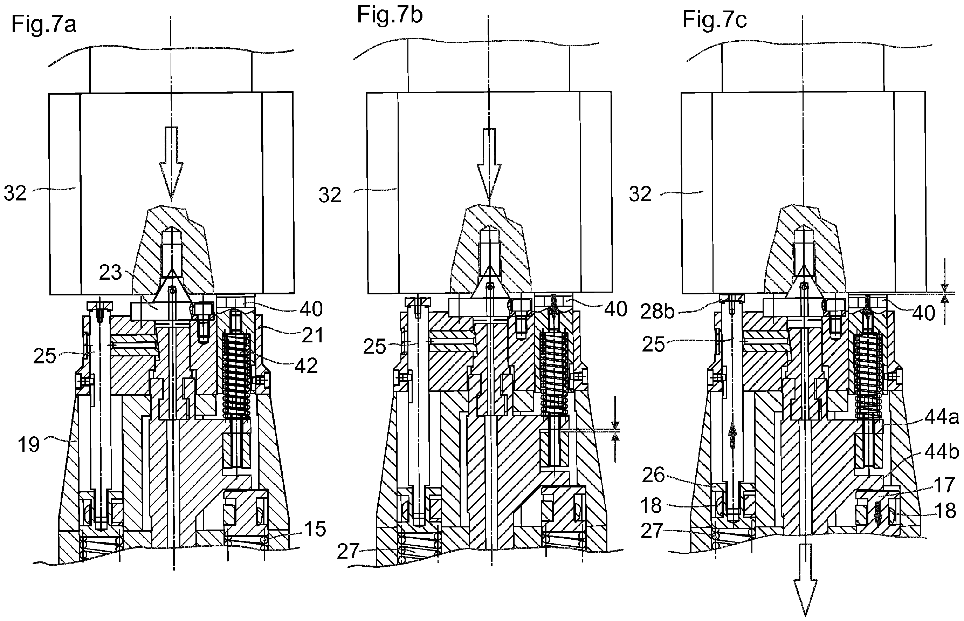

Den weiteren Spannablauf zeigen die Detailansichten der **Figuren 7a bis 7c** in der erweiterten Ausführungsform.

Die in der Vorrichtung mittig angeordnete untere Spitze 23 übernimmt beim Aufsetzen des Werkstücks zunächst eine Vorzentrierung des Werkstücks 32 in dem das Werkstück mit seinem Zentrum auf die untere Spitze 23 aufgesetzt wird. Beim Absetzen des Werkstücks 32 federn nun die Auflagebolzen 40 unter dem Werkstückgewicht über die Druckfeder 42 so lange ein, bis das Werkstück 32 exakt mittig auf der unteren Spitze 23 aufsitzt (vgl. hierzu Figur 7b) wobei es dabei noch durch die Auflagebolzen 40 abgestützt wird. Wenn nun die obere Spitze 33 oder das obere Führungselement die Werkstückführung übernommen haben und ein Kippen des Werkstücks 32 verhindert werden kann, können die Auflagebolzen 40 vom Werkstück 32 zurückgezogen und die Mitnehmerelemente 25 und ggf. die Aufsätze 28a bis 28d mit ihrer Auflagefläche 29 gegen die Werkstückstückstirnseite gedrückt werden. Dazu wird über eine externe Einrichtung, z.B. einen Hydraulikzylinder, der Zugbolzen 11 nach unten gezogen. Über die Arme 44a werden nun die Gewindestifte 41 und damit die Auflagebolzen 40 von der Werkstückstirnseite zurückgezogen und gleichzeitig werden über die Arme 44b die Mitnehmer 17 nach unten bewegt. Das wiederum führt dazu, dass über die Hebel 18 und die Mitnehmer 27 die Mitnehmerelemente 25 gegen die Werkstückstirnseite gedrückt werden. So bald eine ausreichende Andrückkraft vorliegt, werden die Mitnehmerelemente 25, wie bereits beschrieben, entsprechend geklemmt.

## Patentansprüche

1. Vorrichtung für Werkzeugmaschinen zur Aufnahme eines Werkstücks (32) zwischen zwei Zentrierspitzen (23, 33), mit einer Mehrzahl von um eine der Zentrierspitzen (23) angeordneten Mitnehmerelementen (25) zur Drehmitnahme des Werkstücks (32), welche jeweils in Achsrichtung des Werkstücks (32) in einem Vorrichtungsunterteil verschiebbar gelagert und mit einem freien Mitnehmerende mit einer Stirnseite des Werkstücks (32) in Eingriff bringbar sind,
**dadurch gekennzeichnet, dass**
die Mitnehmerelemente (25) im gespannten Zustand des Werkstücks (32) über eine gesteuerte Betätigung eines Zugbolzens (11) in Achsrichtung der Vorrichtung an eine Stirnseite des Werkstücks (32) anpressbar und im weiteren Spannablauf durch eine weitere Betätigung des Zugbolzens i (11) in der Achsrichtung die Mitnehmelemente (25) durch Klemmelemente (24), die auf die Mitnehmerelementen (25) wirken, in ihrer Position klemmbar und spielfrei fixierbar sind.

2. Vorrichtung nach Anspruch 1, **dadurch gekennzeichnet, dass** über Einstellelemente (13) die Federkraft von Federn (27) und damit die Anpresskraft der Mitnehmerelemente (25), an das Werkstück (32), einstellbar ist.

3. Vorrichtung nach Anspruch 1 oder 2, **dadurch gekennzeichnet, dass** über Einstellelemente (13) die Federkraft von Federn (15) und damit die Rückstellkraft der Mitnehmerelemente (25) einstellbar ist.

4. Vorrichtung nach einem der vorhergehenden Ansprüche, **dadurch gekennzeichnet, dass** einzelne Mitnehmerelemente (25) mit unterschiedlichem Abstand zum Zentrum der Vorrichtung angeordnet sind.

5. Vorrichtung nach einem der vorhergehenden Ansprüche, **dadurch gekennzeichnet, dass** die Mitnehmerelemente (25) stirnseitig mit wechselbaren Aufsätzen (28a - d) ausgestattet sind.

6. Vorrichtung nach einem der voranstehenden Ansprüche, **dadurch gekennzeichnet, dass** die untere Spitze (23) axial feststeht oder bewegbar ist.

7. Vorrichtung nach einem der voranstehenden Ansprüche, **dadurch gekennzeichnet, dass** die obere und/oder untere Spitze (23, 33) als Hohlspitze oder Lünette ausgebildet ist.

8. Vorrichtung nach einem der vorhergehenden Ansprüche, **dadurch gekennzeichnet, dass** die untere Spitze (23) austauschbar ist.

9. Vorrichtung nach einem der vorangegangenen Ansprüche, **dadurch gekennzeichnet, dass** die Vorrichtung nachgiebig gelagerte Auflagebolzen (40) zur Abstützung des Werkstücks (32) bei der Werkstückbeladung aufweist.

10. Vorrichtung nach Anspruch 9, **dadurch gekennzeichnet, dass** die Auflagebolzen (40) aktiv zurückziehbar sind.

11. Vorrichtung nach Anspruch 10, **dadurch gekennzeichnet, dass** über einen Zugbolzen (11) die Auflagebolzen (40) aktiv zurückziehbar und die Mitnehmerelemente (25) anlegbar sind.

12. Verfahren zum Einspannen eines Werkstücks (32) mit einer Vorrichtung (10) nach einem der voranstehenden Ansprüche, **dadurch gekennzeichnet dass** das Werkstück (32) beim Einspannen zunächst in seinem Rundlauf zwischen Spitzen (23, 33) zentriert wird, bevor durch aktive Betätigung des Zugbolzens (11) die Mitnehmerstifte (25) an die Werkstückstirnseite angelegt und anschließend die Mitnehmerelemente (25) über Klemmelemente (24) in ihrer Lage fixiert werden.

13. Verfahren nach Anspruch 13, **dadurch gekennzeichnet dass** das Werkstück (32) beim Einspannen zunächst durch federnd gelagerte Aufnahmebolzen (40) abgestützt und in seinem Rundlauf zwischen Spitzen zentriert wird, bevor durch aktive Betätigung des Zugbolzens (11) die Mitnehmerstifte (25) an die Werkstückstirnseite angelegt, die Aufnahmebolzen (40) zurückgezogen und anschließend die Mitnehmerelemente (25) über Klemmelemente (24) in ihrer Lage fixiert werden.

14. Verfahren nach einem der Ansprüche 12 oder 13, **dadurch gekennzeichnet, dass** die Mitnehmerelemente (25) stirnseitig mit unterschiedlichen Auflageflächen (29) versehen werden, wobei die Größe und Form der Auflageflächen (29) abhängig von der Größe der zulässigen Eindrücke am Werkstück (32) ausgelegt werden.

## Claims

1. Device for machine tools for receiving a workpiece (32) between two centring pins (23, 33), comprising a plurality of carrier elements (25) that are arranged around one of the centring pins (23) and are intended for rotatably carrying the workpiece (32), and which are in each case mounted in a device lower part so as to be displaceable in the axial direction of the workpiece (32), and a free carrier end of which can be brought into engagement with an end face of the workpiece (32),
**characterised in that**
in the clamped state of the workpiece (32), the carrier elements (25) can be pressed against an end face of the workpiece (32) by means of controlled actuation of a tension bolt (11) in the axial direction of the device, and, in the further course of the clamping, can be fixed in the position thereof in a clampable and play-free manner by means of further actuation of the tension bolt (11) in the axial direction of the carrier elements (25), by means of clamping elements (24) that act on the carrier elements (25).

2. Device according to claim 1, **characterised in that** the spring force of springs (27), and thus the contact force of the carrier elements (25), on the workpiece (32) can be adjusted by means of adjustment elements (13).

3. Device according to either claim 1 or claim 2, **characterised in that** the spring force of springs (15), and thus the restoring force of the carrier elements (25), can be adjusted by means of adjustment elements (13).

4. Device according to any of the preceding claims, **characterised in that** individual carrier elements (25) are arranged at different spacings from the centre of the device.

5. Device according to any of the preceding claims, **characterised in that** the carrier elements (25) are equipped, at the end fact thereof, with exchangeable attachments (28a-d).

6. Device according to any of the preceding claims, **characterised in that** the lower tip (23) is axially fixed or movable.

7. Device according to any of the preceding claims, **characterised in that** the upper and/or lower tip (23, 33) is designed as a hollow tip or steady rest.

8. Device according to any of the preceding claims, **characterised in that** the lower tip (23) is exchangeable.

9. Device according to any of the preceding claims, **characterised in that** the device comprises resiliently mounted support bolts (40) for supporting the workpiece (32) during workpiece loading.

10. Device according to claim 9, **characterised in that** the support bolts (40) can be actively retracted.

11. Device according to claim 10, **characterised in that** the support bolts (40) can be actively retracted and the carrier elements (25) can be placed on, by means of a tension bolt (11).

12. Method for clamping a workpiece (32) by means of a device according to any of the preceding claims, **characterised in that**, during clamping, the workpiece (32) is centred, in the runout thereof, between tips (23, 33), before the carrier pins (25) are placed on the end face of the workpiece, and subsequently the carrier elements (25) are fixed in position by clamping elements (24), by means of active actuation of the tension bolt (11).

13. Method according to claim 13, **characterised in that**, during clamping, the workpiece (32) is initially supported by resiliently mounted receiving bolts (40), and is centred, in the runout thereof, between tips, before the carrier pins (25) are placed on the end face of the workpiece, the receiving bolts (40) are retracted, and subsequently the carrier elements (25) are fixed in position by clamping elements (24), by means of active actuation of the tension bolt (11).

14. Method according to either claim 12 or claim 13, **characterised in that** the carrier elements (25) are provided, at the end face thereof, with different contact surfaces (29), wherein the size and shape of the contact surfaces (29) are designed in a manner depending on the size of the admissible impressions on the workpiece (32).

## Revendications

1. Dispositif pour machines-outils en vue de la réception d'une pièce à usiner (32) entre deux pointes de centrage (23, 33), avec une pluralité d'éléments d'entraînement (25) disposés autour d'une des pointes de centrage (23) en vue de l'entraînement rotatif de la pièce à usiner (32), qui sont respectivement tournés sur paliers coulissants dans la direction d'axe de la pièce à usiner (32) dans une partie inférieure du dispositif et mettable en prise avec une extrémité d'entraînement libre avec une face frontale de la pièce à usiner (32), **caractérisé en ce que** les éléments d'entraînement (25) sont serrables à l'état tendu de la pièce à usiner (32) via un actionnement dirigé d'un boulon tirant (11) dans la direction d'axe du dispositif sur une face frontale de la pièce à usiner (32), et pendant le déroulement ultérieur de la tension, par un autre actionnement du boulon tirant dans la direction d'axe, les éléments d'entraînement (25) sont calables dans leur position et fixables sans jeu par des éléments calables (24), qui agissent sur les éléments d'entraînement (25).

2. Dispositif selon la revendication 1, **caractérisé en ce que** via des éléments de réglage (13), l'élasticité des ressorts (27), et par conséquent la force de pression des éléments d'entraînement (25), est réglable sur la pièce à usiner (32).

3. Dispositif selon les revendications 1 ou 2, **caractérisé en ce que** via des éléments de réglage (13), l'élasticité des ressorts (15), et par conséquent la force de rappel des éléments d'entraînement (25), est réglable.

4. Dispositif selon une quelconque des revendications précédentes, **caractérisé en ce que** certains éléments d'entraînement (25) sont disposés avec un écart variable vers le centre du dispositif.

5. Dispositif selon une quelconque des revendications précédentes, **caractérisé en ce que** les éléments d'entraînement (25) sont équipés sur la face d'embouts interchangeables (28a - d).

6. Dispositif selon une quelconque des revendications précédentes, **caractérisé en ce que** la pointe inférieure (23) a une position axialement fixe ou est mobile.

7. Dispositif selon une quelconque des revendications précédentes, **caractérisé en ce que** la pointe supérieure et/ou la pointe inférieure (23, 33) est constituée comme pointe creuse ou comme lunette.

8. Dispositif selon une quelconque des revendications précédentes, **caractérisé en ce que** la pointe inférieure (23) est échangeable.

9. Dispositif selon une quelconque des revendications précédentes, **caractérisé en ce que** le dispositif présente des boulons d'appui (40) tournés sur paliers flexibles en vue de l'appui de la pièce à usiner (32) lors du chargement de la pièce à usiner

10. Dispositif selon la revendication 9, **caractérisé en ce que** les boulons d'appui (40) sont activement rétractables.

11. Dispositif selon la revendication 10, **caractérisé en ce que** via un boulon tirant (11), les boulons d'appui (40) sont activement rétractables et les éléments d'entraînement (25) applicables.

12. Procédé en vue du serrage d'une pièce à usiner (32) par des pièces à usiner avec un dispositif (10) selon une quelconque des revendications précédentes, **caractérisé en ce que** la pièce à usiner (32) est d'abord centrée lors du serrage dans sa concentricité entre des pointes (23, 33), avant que par l'actionnement actif du boulon tirant (11), les broches d'entraînement (25) sont appliquées sur la face frontale de la pièce à usiner et ensuite, les éléments d'entraînement (25) sont fixés via des éléments calables (24) dans leur position.

13. Procédé selon la revendication 13, **caractérisé en ce que** la pièce à usiner (32) est d'abord appuyée lors du serrage par des boulons de fixation (40), et dans sa concentricité, est centrée entre des pointes, avant que par l'actionnement actif du boulon tirant (11), les broches d'entraînement (25) sont appliquées sur la face frontale de la pièce à usiner, les boulons de fixation (40) rétractés, et ensuite, les éléments d'entraînement (25) fixés via des éléments calables (24) dans leur position.

14. Procédé selon une quelconque des revendications 12 ou 13, **caractérisé en ce que** les éléments d'entraînement (25) sont dotés frontalement de différentes surfaces d'appui (29), dans lequel la taille et la forme des surfaces d'appui (29) sont dimensionnées en fonction de la taille des impressions admissibles sur la pièce à usiner (32).
